(19) Europäisches Patentamt
European Patent Office
Office européen des brevets

(11) **EP 4 718 027 A1**

(12) **EUROPEAN PATENT APPLICATION**

(43) Date of publication:
**01.04.2026 Bulletin 2026/14**

(21) Application number: 25192728.1

(22) Date of filing: **30.07.2025**

(51) International Patent Classification (IPC):
**G01C 19/72** *(2006.01)*

(52) Cooperative Patent Classification (CPC):
**G01C 19/721**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.09.2024 US 202463700760 P**
**09.05.2025 US 202519203214**

(71) Applicants:
• **National Sun Yat-Sen University**
**Kaohsiung 80424 (TW)**

• **Azimuth Avionics Pty Ltd**
**Geelong, Victoria 3224 (AU)**

(72) Inventors:
• **HUNG, Yung-Jr**
**80424 Kaohsiung (TW)**
• **KUO, Tzu-Jung**
**80424 Kaohsiung (TW)**
• **OBORNE, Michael John**
**Geelong, 3224 (AU)**
• **ROWSE, Philip Jonathan**
**Geelong, 3224 (AU)**

(74) Representative: **Dr. Gassner & Partner mbB**
**Wetterkreuz 3**
**91058 Erlangen (DE)**

(54) **DEVICE WITH GRATING COUPLER-BASED DEPOLARIZED INTERFEROMETRIC FIBER OPTIC GYROSCOPE**

(57) A device with a grating coupler-based depolarized interferometric fiber optic gyroscope is provided. The device includes an integrated optical circuit, a SM fiber coil assembly, a first PM fiber, and a second PM fiber. The integrated optical circuit includes a first coupler and a second coupler on a chip. The first PM fiber is connected between the first coupler and a first end of the SM fiber coil and is rotated by a first angle $\Phi 1$ ranging 35~55 degrees. The second PM fiber is connected between the second coupler and a second end of the SM fiber coil and is rotated by a second angle $\Phi 2$ ranging 35~55 degrees. The first and second PM fibers have lengths L1 > $L_{d1}$ and L2 > $L_{d1}$, and abs(L1-L2) > $L_{d1}$. $L_{d1}$ is a depolarization length depending on a peak wavelength and a spectral width of a light source.

EP 4 718 027 A1

## Description

### Cross-Reference to Related Applications:

The present application claims priority from U.S. Provisional Utility Patent application no. 63/700,760 filed September 30, 2024, and U.S. Non-provisional Utility Patent application no. 19/203,214 filed May 9, 2025; the disclosures of which are incorporated by reference in their entirety.

### Technical Field:

The present invention relates to fiber optic sensing technology, particularly to a grating coupler-based depolarized interferometric fiber optic gyroscope.

### Background:

The gyroscope measures angular rotation around a fixed axis for an inertial space, which serves as a common sensor in modern navigation systems and has a wide spectrum of applications in aerospace, defense, seismology, ships, and automobiles. Among the existing technologies, interferometric fiber optic gyroscope (IFOG) based on the Sagnac effect offers excellent performance of drift and sensitivity without moving elements. An IFOG system comprises components of a light source, a photodetector, a pair of optical power couplers, a pair of phase modulators, a fiber sensing coil, and control electronics.

Silicon photonics multi-functional integrated optical circuit (Si-MIOC) integrates all active and passive components necessary in an IFOG on a silicon-on-insulator chip except the fiber coil and light source. The integration configuration significantly reduces system size and improves reliability, making IFOGs more suitable for scenarios demanding compact and robust designs.

However, the adoption of IFOG technology faces cost challenges, due to the reliance on polarization-maintaining (PM) fibers. The PM fibers incur high material costs. Therefore, there is a need for an improved IFOG design that minimizes reliance on polarization-maintaining (PM) fibers, reducing costs while maintaining high performance and reliability.

### Summary of Invention:

It is an objective of the present invention to provide devices to address the aforementioned shortcomings and unmet needs in the state of the art.

The present invention provides means to realize depolarized fiber optic gyroscope that enables the use of single mode (SM) fiber coil as the sensing element. The price of SM fibers is 10 times less than polarization-maintaining fibers. The optical inputs/outputs of integrated photonics chip are surface grating couplers. First ends of a pair of polarization-maintaining fibers are connected to the grating couplers, and second ends of the pair of the polarization-maintaining (PM) fibers are connected to a single mode fiber coil. Each of the slow or fast axes of the PM fiber is at an angle (e.g., 35~55 degrees) to the direction of grating stripes that form a grating coupler.

In accordance with one aspect of the present invention, a device with a grating coupler-based depolarized interferometric fiber optic gyroscope is provided. The device includes an integrated optical circuit, a SM fiber coil assembly, a first PM fiber, and a second PM fiber. The integrated optical circuit is arranged on a chip and is configured to receive at least one optical signal from a light source. The integrated optical circuit includes a first grating coupler and a second grating coupler which serve as interfaces between the integrated optical circuit and external elements. The SM fiber coil assembly has a first end and a second end opposite the first end. The first PM fiber is optically coupled with the first grating coupler. The first PM fiber is connected between the first grating coupler and the first end of the SM fiber coil, and the first PM fiber connected to the first grating coupler is rotated by a first tilted angle $\Phi 1$ relative to a direction of grating stripes of the first grating coupler. The first tilted angle $\Phi 1$ ranges from 35 degrees to 55 degrees. The second PM fiber is optically coupled with the second grating coupler. The second PM fiber is connected between the second grating coupler and the second end of the SM fiber coil, and the second PM fiber connected to the second grating coupler is rotated by a second tilted angle $\Phi 2$ relative to a direction of grating stripes of the second grating coupler. The second tilted angle $\Phi 2$ ranges from 35 degrees to 55 degrees. The first PM fiber and the second PM fiber have lengths L1 and L2, respectively, where $L1 > L_{d1}$, $L2 > L_{d1}$, an absolute difference value between L1 and $L2 > L_{d1}$. $L_{d1}$ is a first depolarization length that depends on a peak wavelength and a spectral width of the light source.

By the configuration, there is an angle between a principal axis of polarization in a PM optical fiber and grating coupler on-chip to depolarization, enabling single-mode fiber coils to serve as an angular sensing element. Consequently, applying single-mode fiber coils as the angular sensing element effectively reduces costs while maintaining performance.

### Brief Description of Drawings:

Embodiments of the invention are described in more details hereinafter with reference to the drawings, in which:

FIG. 1 shows a schematic drawing of a configuration of a device with a single-axis grating coupler-based depolarized interferometric fiber optic gyroscope according to some embodiments of the present invention;

FIG. 2A, FIG. 2B, and FIG. 2C illustrate specific implementations related to the tilted angle according to some embodiments of the present invention;

FIG. 3 shows a schematic drawing of a configuration of a device with a single-axis grating coupler-based depolarized interferometric fiber optic gyroscope according to some embodiments of the present invention;

FIG. 4 shows a schematic drawing of a configuration of a device with a single-axis grating coupler-based depolarized interferometric fiber optic gyroscope according to some embodiments of the present invention;

FIG. 5 shows a schematic drawing of a configuration of a device with a single-axis grating coupler-based depolarized interferometric fiber optic gyroscope according to some embodiments of the present invention;

FIG. 6 shows a schematic drawing of a configuration of a device with a single-axis grating coupler-based depolarized interferometric fiber optic gyroscope according to some embodiments of the present invention;

FIG. 7 shows a schematic drawing of a configuration of a device with a single-axis grating coupler-based depolarized interferometric fiber optic gyroscope according to some embodiments of the present invention;

FIG. 8 shows a schematic drawing of a configuration of a device with a single-axis grating coupler-based depolarized interferometric fiber optic gyroscope according to some embodiments of the present invention;

FIG. 9 shows a schematic drawing of a configuration of a device with a single-axis grating coupler-based depolarized interferometric fiber optic gyroscope according to some embodiments of the present invention;

FIG. 10 shows a schematic drawing of a configuration of a device with a three-axis grating coupler-based depolarized interferometric fiber optic gyroscope according to some embodiments of the present invention;

FIG. 11 shows a schematic drawing of a configuration of a device with a three-axis grating coupler-based depolarized interferometric fiber optic gyroscope according to some embodiments of the present invention;

FIG. 12 shows a schematic drawing of a configuration of a device with a four-axis grating coupler-based depolarized interferometric fiber optic gyroscope according to some embodiments of the present invention;

FIG. 13 shows a schematic drawing of a configuration of a device with a N-axis grating coupler-based depolarized interferometric fiber optic gyroscope according to some embodiments of the present invention;

FIG. 14 shows a schematic drawing of a configuration of a device with a four-axis grating coupler-based depolarized interferometric fiber optic gyroscope according to some embodiments of the present invention; and

FIG. 15 shows a schematic drawing of a configuration of a device with a N-axis grating coupler-based depolarized interferometric fiber optic gyroscope according to some embodiments of the present invention.

## Detailed Description of the Invention:

In the following description, devices with grating coupler-based depolarized interferometric fiber optic gyroscopes and the likes are set forth as preferred examples. It will be apparent to those skilled in the art that modifications, including additions and/or substitutions may be made without departing from the scope and spirit of the invention. Specific details may be omitted so as not to obscure the invention; however, the disclosure is written to enable one skilled in the art to practice the teachings herein without undue experimentation.

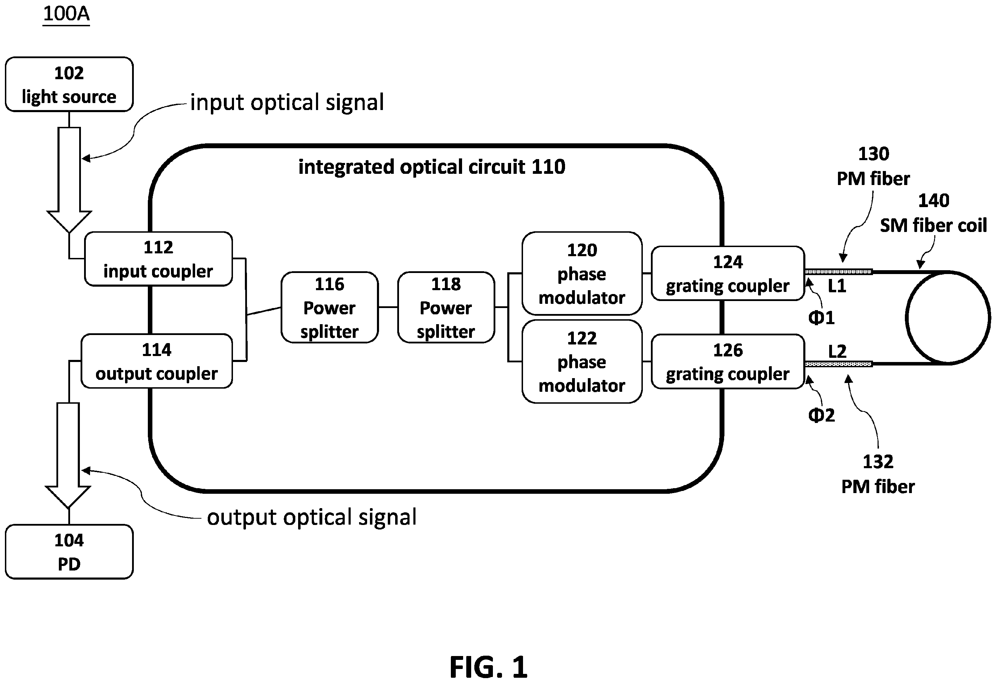

FIG. 1 shows a schematic drawing of a configuration of a device 100A with a single-axis grating coupler-based depolarized interferometric fiber optic gyroscope according to some embodiments of the present invention. In the configuration of FIG. 1, a light source and a photodetector (PD) are coupled to an integrated optical circuit (IOC) through optical couplers, while both ends of a fiber coil are connected to IOC through grating couplers, in which two sections of PM fiber are employed between IOC and fiber coil. The device 100A includes a light source 102, a photodetector 104, an integrated optical circuit 110, a first polarization-maintaining (PM) fiber 130, a second PM fiber 132, and a single-mode (SM) fiber coil assembly 140, establishing a gyroscope system.

The light source 102 is aligned with the integrated optical circuit 110 and is configured to generate input light required for the gyroscope system. For example, the light source 102 can generate a light beam for providing optical signals with a peak wavelength and a spectral width. The light source 102 may be a broadband optical emitter/module that provides at least one broadband optical signal to the integrated optical circuit 110. In some embodiments, the light source 102 can be implemented using components such as laser diodes, superluminescent diodes (SLDs), light-emitting diodes (LEDs), integrated hybrid light sources, or fiber-coupled laser modules.

The photodetector 104 is configured to receive an interference optical signal from the integrated optical circuit 110. The photodetector 104 can convert at least one optical interference signal into an electrical signal, which is then analyzed to determine an angular velocity based on phase shift caused by Sagnac effect. In some embodiments, the photodetector 104 can be implemented using components such as PIN photodiodes, avalanche photodiodes (APDs), metal-semiconductor-metal (MSM) photodetectors, or integrated photodetectors.

The integrated optical circuit 110 can be implemented as an integrated optical chip (IOC), where various optical components, such as waveguides, couplers, modulators, and photodetectors, are integrated onto a single chip. This integration achieves light routing within the gyroscope system, such that the integrated optical circuit 110 can serve as a central platform for optical signal processing, connecting external components such as the light source, the photodetector, PM fibers, and the SM fiber coil assembly.

The integrated optical circuit 110 includes an input coupler 112, an output couple 114, a first power splitter 116, a second power splitter 118, a first phase modulator 120, a second phase modulator 122, a first grating coupler 124, and a second grating coupler 126.

In the present disclosure, the power splitter can be implemented as a 1x2 coupler, which is used for splitting or combining optical signals within the integrated optical circuit. In some embodiments, the 1x2 coupler can be implemented using integrated waveguide structures, such as directional couplers or multi-mode interference (MMI) couplers, designed for on-chip integration. The grating coupler serves as an interface between the integrated optical circuit and external elements, such as PM fibers or SM fibers.

The input coupler 112 is optically coupled with the light source 102 for receiving and optically coupling optical signals from the light source 102 into the integrated optical circuit 110. The output coupler 114 is optically coupled with the photodetector 104 for directing the interference optical signals from the integrated optical circuit 110 to the photodetector 104. The light source 102 and the photodetector 104 are external components with respect to the integrated optical circuit 110, and the input coupler 112 and the output coupler 114 can be implemented as an edge coupler, grating coupler for them.

The first power splitter 116 is optically coupled with the input coupler 112 to receive optical signals from the light source 102 via its input port. The first power splitter 116 has two output ports: one optically coupled with the second power splitter 118, and the other optically coupled with the output coupler 114 to route detection optical signals to the photodetector 104. The second power splitter 118 receives a portion of the optical signals from the first power splitter 116 via its input port and splits this portion into two separate optical paths.

The two output paths from the second power splitter 118 are then directed to the first phase modulator 120 and the second phase modulator 122, respectively, for introducing phase shifts. The first phase modulator 120 is optically coupled with the first grating coupler 124, and the second phase modulator 122 is optically coupled with the second grating coupler 126. In some embodiments, the first phase modulator 120 and the second phase modulator 122 can be implemented on-chip using thermo-optic or electro-optic technologies.

The first grating coupler 124 and the second grating coupler 126 are configured to transfer the modulated optical signals to external polarization-maintaining fibers (i.e., the first PM fiber 130 and the second PM fiber 132), which guide the optical signals in clockwise (CW) and counterclockwise (CCW) directions through the SM fiber coil assembly 140. As such, the configuration enables the generation of interference signals required for the angular velocity measurement based on the Sagnac effect.

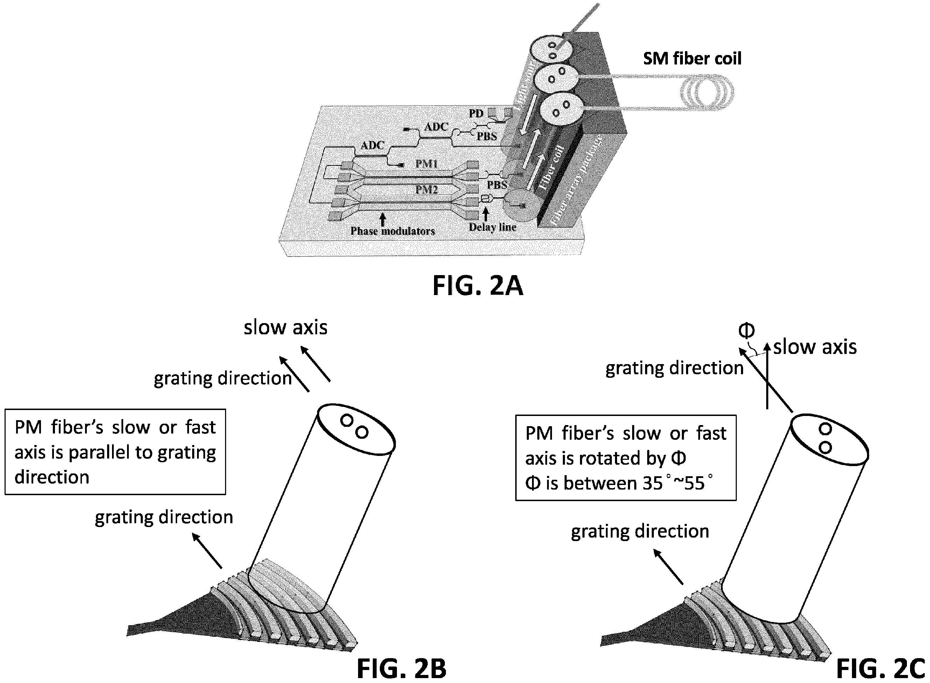

In the configuration, the first PM fiber 130 is optically coupled between the first grating coupler 124 and a first end of the SM fiber coil assembly 140, in which the first PM fiber 130 connected to the first grating coupler 124 is rotated by a first tilted angle $\Phi 1$ relative to a direction of grating stripes of the first grating coupler 124. In the present disclosure, the tilted angle enhances the optical performance of the device 100A. Specifically, the first tilted angle $\Phi 1$ is defined as an angle between a slow or fast axis of the first PM fiber 130 and the direction of the grating stripes of the first grating coupler 124. In this regard, FIG. 2A, FIG. 2B, and FIG. 2C illustrate specific implementations related to the tilted angle. FIG. 2A presents the configuration of FIG. 1 in a three-dimensional schematic view, illustrating the connection relationship between the grating couplers and PM fibers. In some embodiments, the grating coupler can be positioned anywhere on the surface of the chip. FIG. 2B depicts a scenario where the slow or fast axis of the PM fiber is parallel to the grating direction. FIG. 2C illustrates a case where the slow or fast axis of the PM fiber is rotated by an angle $\Phi$, where $\Phi$ ranges between 35° and 55°. The angle $\Phi$ in FIG. 2C can correspond to the tilted angle mentioned in this document, such as the first tilted angle $\Phi 1$.

Referring back to FIG. 1. Similarly, the second PM fiber 132 is optically coupled between the second grating coupler 126 and a second end of the SM fiber coil assembly 140, in which the second PM fiber 132 connected to the second grating coupler 126 is rotated by a second tilted angle $\Phi 2$ relative to a direction of grating stripes of the second grating coupler 126. Specifically, the second tilted angle $\Phi 2$ is defined as an angle between a slow or fast axis of the second PM fiber 132 and the direction of the grating stripes of the second grating coupler 126.

In some embodiments, the first tilted angle $\Phi 1$ ranges from 35 degrees to 55 degrees, and the second tilted angle $\Phi 2$ ranges from 35 degrees to 55 degrees. In some embodiments, the first tilted angle $\Phi 1$ and the second tilted angle $\Phi 2$ are set to be different from each other. In some embodiments, the sum of the first tilted angle $\Phi 1$ and the second tilted angle $\Phi 2$ equals 90°. In some embodiments, the first tilted angle $\Phi 1$ and the second tilted angle $\Phi 2$ are set the same as each other.

The rotation at the first and second tilted angles $\Phi 1$ and $\Phi 2$ decomposes the incoming optical signal in each PM fiber into two orthogonal polarization components aligned with the slow and fast axes of the PM fiber, thereby achieving the depolarizing effect. As the optical signal propagates through the birefringent PM fibers, the different propagation speeds of the two components introduce a varying phase difference, causing rapid fluctuations. Then, the depolarized light signal enters the SM fiber coil assembly 140, the SM fiber coil assembly 140 can be effectively used as the angular velocity sensing element, providing both cost efficiency and measurement capability. Moreover, to achieve the depolarizing effect, the first PM fiber 130 and the second PM fiber 132 are customized according to specific length requirements as follows.

The first PM fiber 130 and the second PM fiber 132 have lengths L1 and L2, respectively, in which: L1 > $L_{d1}$; L2 > $L_{d1}$; and abs(L1-L2) > $L_{d1}$. In some embodiments, the depolarization length $L_{d1}$ ranges from about 30 cm to about 50 cm. In various embodiments, the depolarization length $L_{d1}$ varies based on the applied parameters to the gyroscope system. In one embodiment, a ratio of the length L1 or L2 to a length of the SM fiber coil assembly 140 ranges from 0.001% to 10%, thereby achieving the system reliability.

For example, $L_{d1} = \dfrac{Lc1 * Lb1}{\lambda}$, where

$L_{c1} = \dfrac{\lambda^2}{n_{g1}\Delta\lambda}$ and $L_{b1} = \dfrac{\lambda}{B1}$, and where $\lambda$ is peak wavelength of light source (e.g., the light source 102); $L_{c1}$ is coherence length; $n_{g1}$ is group refractive index of the first PM fiber 130 and the second PM fiber 132; $L_{b1}$ is beat length; $\Delta\lambda$ is spectral width of light source (e.g., the light source 102); B1 is birefringence of PM fiber (e.g., the first PM fiber 130 and the second PM fiber 132), in which B1 = $n_{slow} - n_{fast}$.

Specifically, the peak wavelength of the light source refers to the wavelength with the highest intensity in the emitted spectrum. The depolarization length indicates the distance required for the phase difference between the two polarization components to become sufficiently large, resulting in the depolarizing effect. The coherence length of the light source represents the distance over which the light waves maintain coherence. The beat length refers to the distance required for the phase difference between the slow and fast axes to accumulate $2\pi$.

Therefore, the gyroscope system integrating a 1D grating coupler structure, tilted PM fibers, and a SM fiber coil is achieved, thereby reducing the device cost while maintaining acceptable performance on angular velocity measurement. The device 100A with the gyroscope system utilizes physical components to enable the use of an SM fiber coil as the sensing element, allowing it to minimize reliance on material constraints and further enhancing design flexibility.

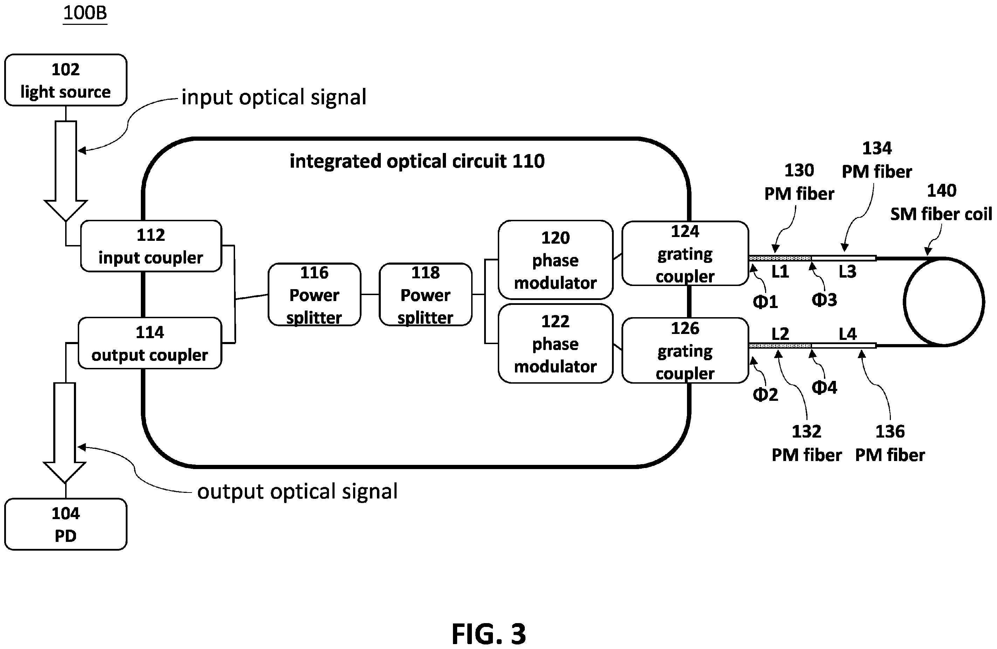

FIG. 3 shows a schematic drawing of a configuration of a device 100B with a single-axis grating coupler-based depolarized interferometric fiber optic gyroscope according to some embodiments of the present invention. In the configuration of FIG. 3, a light source and a PD are coupled to an IOC through optical couplers, while both ends of a fiber coil are connected to the IOC through grating couplers, in which four sections of PM fiber are employed between IOC and fiber coil. The device 100B has a configuration similar to that of the device 100A, except that the device 100B further includes a third PM fiber 134 and a fourth PM fiber 136.

The third PM fiber 134 is connected between the first PM fiber 130 and the first end of the SM fiber coil assembly 140. The third PM fiber 134 is rotated by a third tilted angle Φ3 relative to a slow axis of the first PM fiber 130 (or equivalently a fast axis, as they are orthogonal). Similarly, the fourth PM fiber 136 is connected between the second PM fiber 132 and the second end of the SM fiber coil assembly 140. The fourth PM fiber 136 is rotated by a fourth tilted angle Φ4 relative to a slow axis of the second PM fiber 132 (or equivalently a fast axis). In some embodiments, the third tilted angle Φ3 ranges from 35 degrees to 55 degrees, and the fourth tilted angle Φ4 ranges from 35 degrees to 55 degrees. In some embodiments, the first tilted angle Φ1, the second tilted angle Φ2, the third tilted angle Φ3, and the fourth tilted angle Φ4 are set the same as each other.

In some embodiments, the optical material of the first PM fiber 130 and the second PM fiber 132 is different than the optical material of the third PM fiber 134 and the fourth PM fiber 136, which means that the first PM fiber 130 and the second PM fiber 132 may have a group refractive index different than that of the third PM fiber 134 and the fourth PM fiber 136.

The third PM fiber 134 and the fourth PM fiber 136 have lengths L3 and L4, respectively, in which: L3 > $L_{d2}$; L4 > $L_{d2}$; and abs(L3-L4) > $L_{d2}$. In some embodiments, the depolarization length $L_{d2}$ ranges from about 30 cm to about 50 cm. In various embodiments, the depolarization length $L_{d2}$ varies based on the applied parameters to the gyroscope system. In one embodiment, a ratio of the length L3 or L4 to a length of the SM fiber coil assembly 140 ranges from 0.001% to 10%.

For example, $L_{d2} = \dfrac{Lc2 * Lb2}{\lambda}$, where

$L_{c2} = \dfrac{\lambda^2}{n_{g2}\Delta\lambda}$ and $L_{b2} = \dfrac{\lambda}{B2}$, and where $\lambda$ is peak wavelength of light source (e.g., the light source 102); $L_{c2}$ is coherence length; $n_{g2}$ is group refractive index of the third PM fiber 134 and the fourth PM fiber 136; $L_{b2}$ is beat length; $\Delta\lambda$ is spectral width of light source (e.g., the light source 102); B2 is birefringence of PM fiber (e.g., the third PM fiber 134 and the fourth PM fiber 136), in which B2 = $n_{slow} - n_{fast}$. Accordingly, each of the lengths L1 and L2 may be different than the lengths L3 and L4; for example, a ratio of the length L1 to the length L2 may be different than a ratio of the length L3 to the length L4.

The configuration mitigates performance degradation caused by potential misalignment in the optical path established by the fibers. By introducing additional PM fibers with a tilted angle, the gyroscope system compensates for alignment errors, thereby enhancing overall stability.

In addition to reducing costs, the provided solution of the present invention is adaptable to various FOG configurations, demonstrating high flexibility.

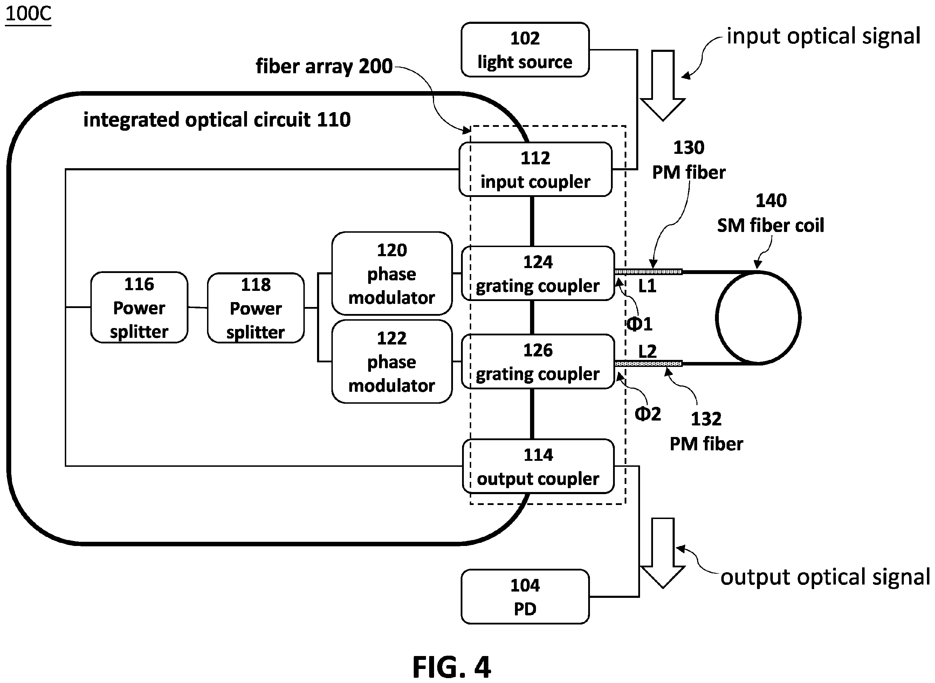

FIG. 4 shows a schematic drawing of a configuration of a device 100C with a single-axis grating coupler-based depolarized interferometric fiber optic gyroscope according to some embodiments of the present invention. In the configuration of FIG. 4, a light source, a PD, and both ends of a fiber coil are connected to an IOC through grating couplers arranged in a row, in which two sections of PM fiber are employed between IOC and fiber coil. The device 100C has a configuration similar to that of the device 100A, except that the device 100C has a different element layout for the integrated optical circuit 110.

The device 100C has a port array at one single side of the integrated optical circuit 110. For example, the input coupler 112, the output coupler 114, the first grating coupler 124, and the second grating coupler 126 are disposed at the right side of the integrated optical circuit 110. The input coupler 112 and the output coupler 114 are grating couplers. The single-side port configuration is suitable for using a fiber array 200 to optically couple with the integrated optical circuit 110 directly, and the first and second PM fibers 130 and 132 as afore-described with the tilted angles can be applied to the fiber array 200. For example, the fiber array 200 includes fibers for optically coupling the integrated optical circuit 110 to the light source 102 and the photodetector 104, as well as the first and second PM fibers 130 and 132 for achieving a depolarizing effect, facilitating easy assembly of the gyroscope system.

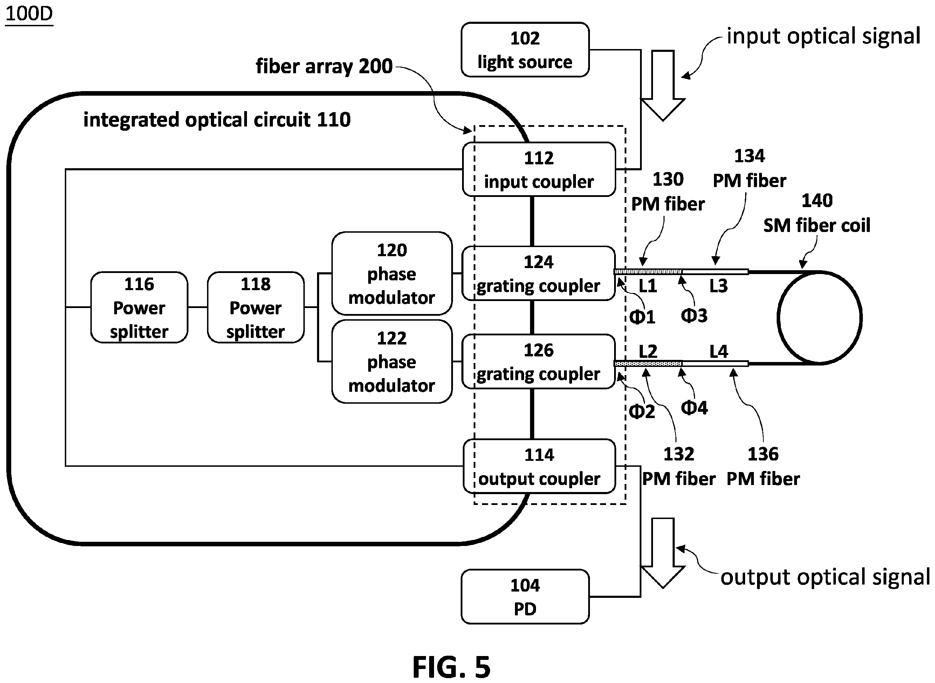

FIG. 5 shows a schematic drawing of a configuration of a device 100D with a single-axis grating coupler-based depolarized interferometric fiber optic gyroscope according to some embodiments of the present invention. In the configuration of FIG. 5, a light source, a PD, and both ends of a fiber coil are connected to an IOC through grating couplers arranged in a row, in which four sections of PM fiber are employed between the IOC and fiber coil. The device 100D has a configuration similar to that of the device 100B, except that the device 100D has a different element layout for the integrated optical circuit 110.

The device 100D has a port array at one single side of the integrated optical circuit 110. For example, the input coupler 112, the output coupler 114, the first grating coupler 124, and the second grating coupler 126 are disposed at the right side of the integrated optical circuit 110. The input coupler 112 and the output coupler 114 are grating couplers. The single-side port configuration is suitable for using a fiber array 200 to optically couple with the integrated optical circuit 110 directly, and the first and second PM fibers 130 and 132 and the third and fourth PM fibers 134 and 136 as afore-described with the tilted angles can be applied to the fiber array 200. For example, the fiber array 200 includes fibers for optically coupling the integrated optical circuit 110 to the light source 102 and the photodetector 104, as well as the first and second PM fibers 130 and 132 and the third and fourth PM fibers 134 and 136 for achieving a depolarizing effect, facilitating easy assembly of the gyroscope system.

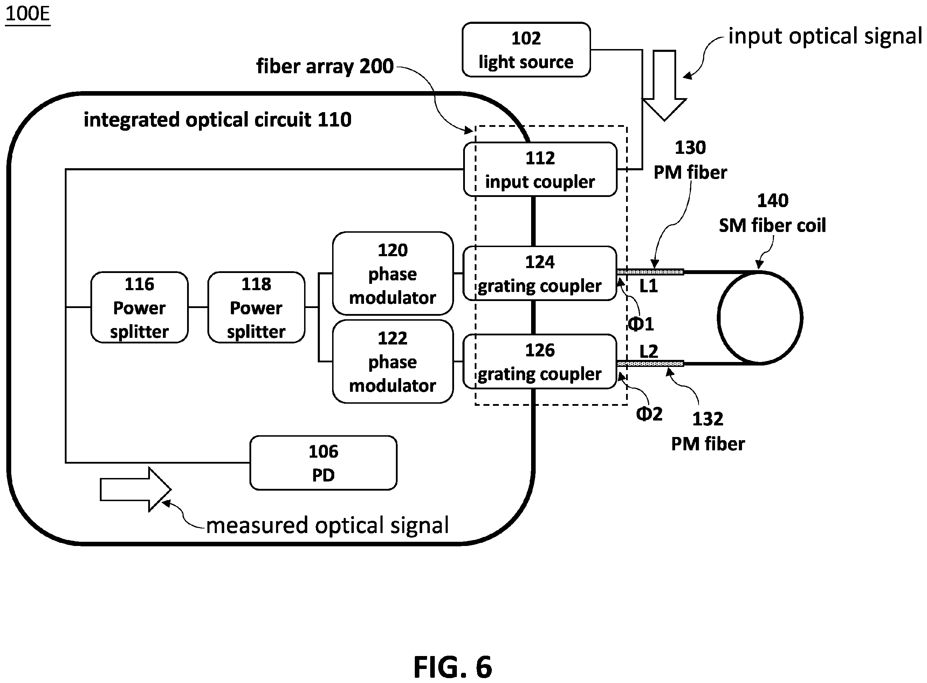

FIG. 6 shows a schematic drawing of a configuration of a device 100E with a single-axis grating coupler-based depolarized interferometric fiber optic gyroscope according to some embodiments of the present invention. In the configuration of FIG. 6, a light source and both ends of a fiber coil are connected to an IOC through grating couplers arranged in a row and a PD is implemented on chip, in which two sections of PM fiber are employed between IOC and fiber coil. The device 100E has a configuration similar to that of the device 100C, except that the integrated optical circuit 110 of the device 100E has an on-chip photodetector 106. The on-chip photodetector 106 is part of the integrated optical circuit 110, closely integrated with other optical components on the same chip. The on-chip photodetector 106 is directly optically coupled with the first power splitter 116. Even if the layout of the integrated optical circuit 110 changes, the previously described fiber array 200 or the PM fibers with the tilted angles can still be combined with the integrated optical circuit 110.

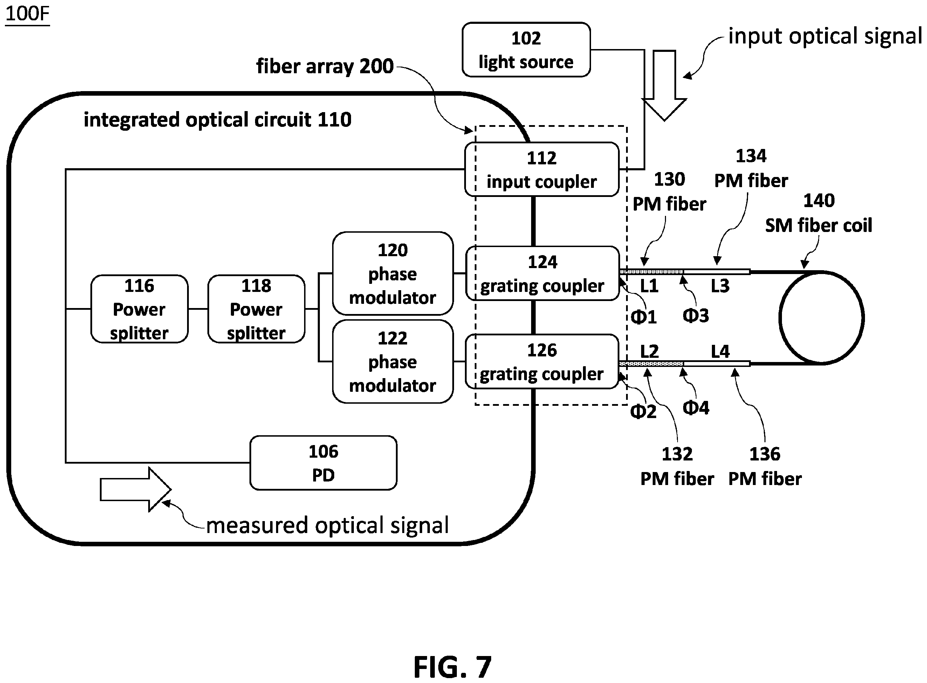

FIG. 7 shows a schematic drawing of a configuration of a device 100F with a single-axis grating coupler-based depolarized interferometric fiber optic gyroscope according to some embodiments of the present invention. In the configuration of FIG. 7, a light source and both ends of a fiber coil are connected to an IOC through grating couplers arranged in a row, and a PD is implemented on chip, in which four sections of PM fiber are employed between IOC and fiber coil. The device 100F has a configuration similar to that of the device 100E, except that the device 100F further includes extra PM fibers, namely, the third PM fiber 134 and the fourth PM fiber 136, which are applied to the fiber array 200.

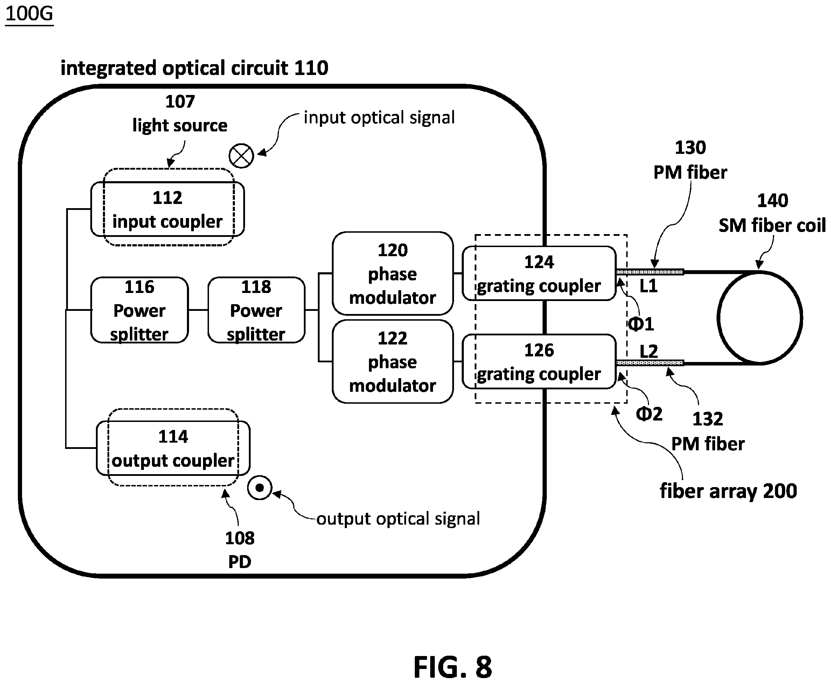

FIG. 8 shows a schematic drawing of a configuration of a device 100G with a single-axis grating coupler-based depolarized interferometric fiber optic gyroscope according to some embodiments of the present invention. In the configuration of FIG. 8, a light source, a PD, and both ends of a fiber coil are connected to an IOC through grating couplers arranged in a row, and the PD and the light source are hybrid bonded on top of a grating coupler, respectively, in which two sections of PM fiber are employed between the IOC and fiber coil. The device 100G has a configuration similar to that of the device 100C, except that the device 100G further includes a hybrid light source 107 and a hybrid photodetector 108.

The hybrid light source 107 is directly positioned above the top grating of the input coupler 112, enabling vertical coupling of light into the integrated optical circuit 110. Similarly, the hybrid photodetector 108 is directly positioned above the top grating of the output coupler 114, facilitating vertical detection of the optical signals from the integrated optical circuit 110. This vertical coupling design minimizes alignment errors and provides a flexible integration solution. In some embodiments, the hybrid light source 107 can be implemented using components such as DFB lasers, VCSELs, superluminescent diodes (SLDs), or laser diodes with integrated SOAs. In some embodiments, the hybrid photodetector 108 can be implemented using PIN photodiodes, avalanche photodiodes (APDs), MSM photodetectors, or photodetector arrays.

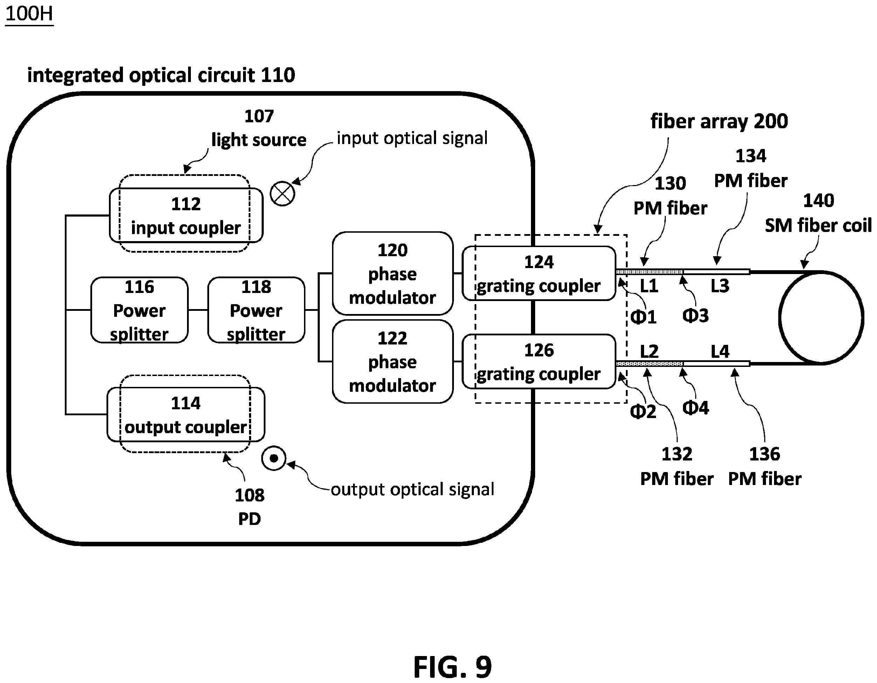

FIG. 9 shows a schematic drawing of a configuration of a device 100H with a single-axis grating coupler-based depolarized interferometric fiber optic gyroscope according to some embodiments of the present invention. In the configuration of FIG. 9, a light source, a PD, and both ends of a fiber coil are connected to an IOC through grating couplers arranged in a row, and the PD and the light source are hybrid bonded on top of a grating coupler, respectively, in which four sections of PM fiber are employed between the IOC and fiber coil. The device 100H has a configuration similar to that of the device 100G, except that the device 100H further includes extra PM fibers, namely, the third PM fiber 134 and the fourth PM fiber 136, which are applied to the fiber array 200.

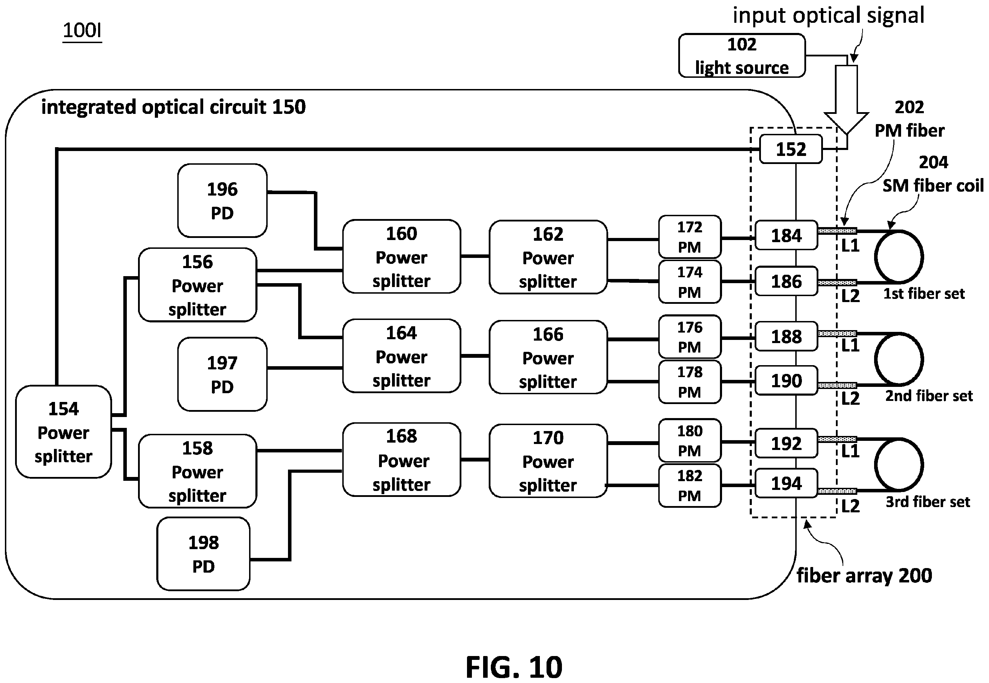

FIG. 10 shows a schematic drawing of a configuration of a device 100I with a three-axis grating coupler-based depolarized interferometric fiber optic gyroscope according to some embodiments of the present invention. In the configuration of FIG. 10, a shared light source and both ends of three fiber coils are respectively connected to an IOC through grating couplers arranged in a row, and three PDs are implemented on a chip, in which two sections of PM fiber are employed between IOC and a fiber coil. The device 100I has a configuration similar to that of the device 100B, except that the device 100I includes an integrated optical circuit 150 with a three-axis on-chip photodetector layout.

Specifically, the integrated optical circuit 150 includes an input coupler 152, a first power splitter 154, a second power splitter 156, a third power splitter 158, a fourth power splitter 160, a fifth power splitter 162, a sixth power splitter 164, a seventh power splitter 166, an eighth power splitter 168, a ninth power splitter 170, a first phase modulator (PM) 172, a second phase modulator 174, a third phase modulator 176, a fourth phase modulator 178, a fifth phase modulator 180, a sixth phase modulator 182, a first grating coupler 184, a second grating coupler 186, a third grating coupler 188, a fourth grating coupler 190, a fifth grating coupler 192, a sixth grating coupler 194, a first photodetector 196, a second photodetector 197, and a third photodetector 198. Similarly, the power splitters of the integrated optical circuit 150 can be implemented as 1x2 couplers.

The input coupler 152 is optically coupled with the light source 102 for receiving and coupling optical signals from the light source 102 into the integrated optical circuit 150.

The first power splitter 154 is optically coupled with the input coupler 152 for receiving optical signals from the light source 102 via its input port and is also optically coupled with the second and third power splitter 156 and 158 via its output ports.

The second power splitter 156 receives optical signals from its input port and splits them into the fourth power splitter 160 and the sixth power splitter 164. The fourth power splitter 160 receives optical signals from its input port and splits them into the fifth power splitter 162, which further splits the received optical signals into the first phase modulator 172 and the second phase modulator 174. The first phase modulator 172 and the second phase modulator 174 are optically coupled with the first grating coupler 184 and the second grating coupler 186, respectively, which function as grating couplers for signal routing.

The sixth power splitter 164 receives optical signals from the second power splitter 156 via its input port and splits them into the seventh power splitter 166, which further splits the received optical signals into the third phase modulator 176 and the fourth phase modulator 178. The third phase modulator 176 and the fourth phase modulator 178 are optically coupled with the third grating coupler 188 and the fourth grating coupler 190, respectively, which function as grating couplers for signal routing.

The third power splitter 158 receives optical signals from the first power splitter 154 via its input port and directs them into the eighth power splitter 168, which splits them into the ninth power splitter 170. The ninth power splitter 170 splits the received optical signals into the fifth phase modulator 180 and the sixth phase modulator 182. The fifth phase modulator 180 and the sixth phase modulator 182 are optically coupled with the fifth grating coupler 192 and the sixth grating coupler 194, respectively, which function as grating couplers for signal routing.

The device 100I includes a fiber array 200 connected to the integrated optical circuit 150. The fiber array 200 includes fibers for guiding input light into the input coupler 152, as well as three fiber sets for angular velocity detection. Each fiber set includes two PM fibers 202 with tilted angles and one SM fiber coil assembly 204, as afore-described. The fiber sets of the fiber array 200 are configured to measure angular velocity along specific axes (e.g., X-, Y-, Z-axis), allowing the sets to collectively achieve three-axis angular velocity measurement.

For the first axis, a first fiber set of the fiber array 200 is connected to the photodetector 196 at least through the first grating coupler 184 and the second grating coupler 186. For the second axis, a second fiber set of the fiber array 200 is connected to the photodetector 197 at least through the third grating coupler 188 and the fourth grating coupler 190. For the third axis, a third fiber set of the fiber array 200 is connected to the photodetector 198 at least through the fifth grating coupler 192 and the sixth grating coupler 194.

This configuration enables independent detection for each axis, achieving three-axis gyroscope measurement with on-chip photodetectors.

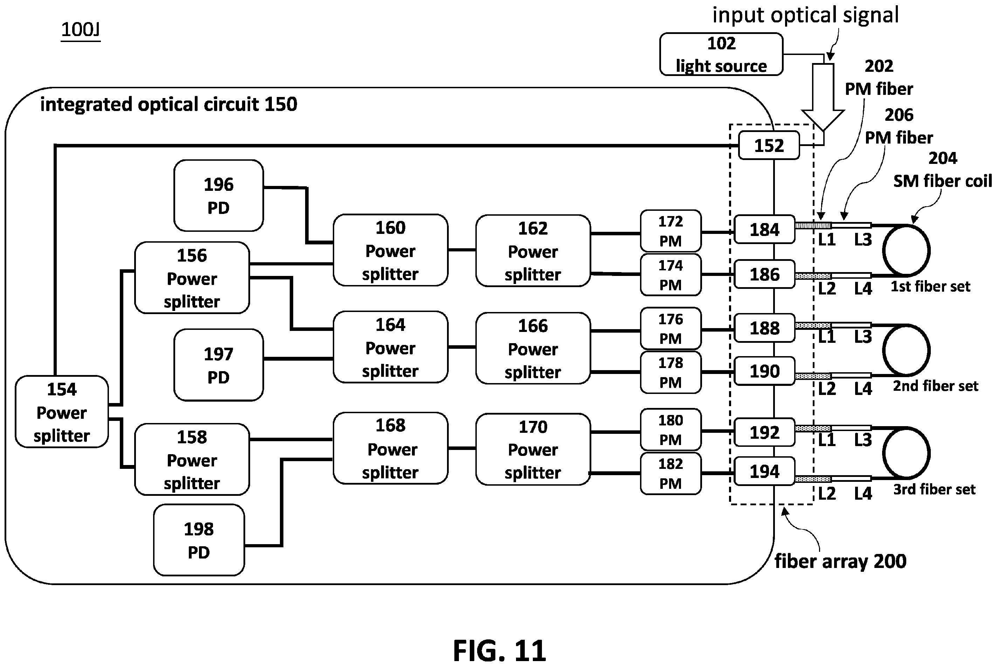

FIG. 11 shows a schematic drawing of a configuration of a device 100J with a three-axis grating coupler-based depolarized interferometric fiber optic gyroscope according to some embodiments of the present invention. In the configuration of FIG. 11, a shared light source and both ends of three fiber coils are respectively connected to an IOC through grating couplers arranged in a row, and three PDs are implemented on a chip, in which four sections of PM fiber are employed between the IOC and a fiber coil. The device 100J has a configuration similar to that of the device 100I, except that the device 100J includes the fiber array 200 with each fiber set including four PM fibers 202 and 206 with tilted angles and one SM fiber coil assembly. The configuration of each fiber set is identical or similar to that of device 100B (i.e., four PM fibers 202 and 206 with tilted angles and lengths L1, L2, L3, L4).

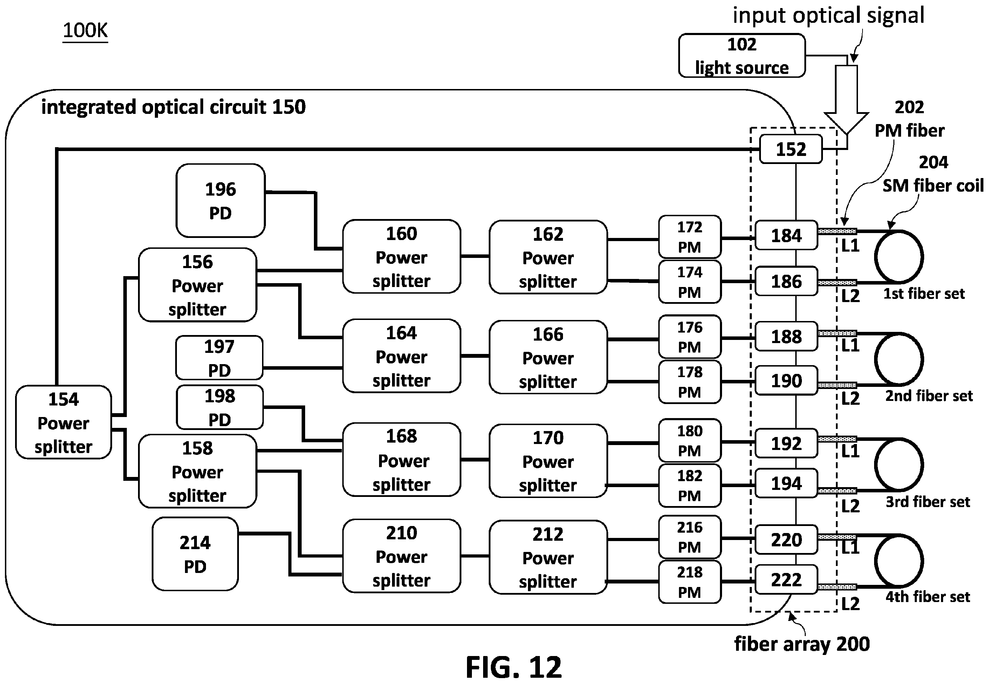

FIG. 12 shows a schematic drawing of a configuration of a device 100K with a four-axis grating coupler-based depolarized interferometric fiber optic gyroscope according to some embodiments of the present invention. In the configuration of FIG. 12, a shared light source and both ends of four fiber coils are respectively connected to an IOC through grating couplers arranged in a row, and four PDs are implemented on chip, in which two sections of PM fiber are employed between IOC and a fiber coil. The device 100K has a configuration similar to that of the device 100I, except that the device 100K includes one more optical path for the fourth-axis angular velocity measurement, thereby achieving a four-axis on-chip photodetector layout.

Specifically, the integrated optical circuit 150 further includes a tenth power splitter 210, an eleventh power splitter 212, a fourth photodetector 214, a seventh phase modulator 216, an eighth phase modulator 218, a seventh grating coupler 220, an eighth grating coupler 222 for constructing an optical path for the fourth-axis angular velocity measurement. Furthermore, the fiber array 200 further includes a fourth fiber set which is connected to the photodetector 214 at least through the seventh grating coupler 220 and the eighth grating coupler 222 and includes two PM fibers 202 with tilted angles and one SM fiber coil assembly 204 for the fourth-axis measurement.

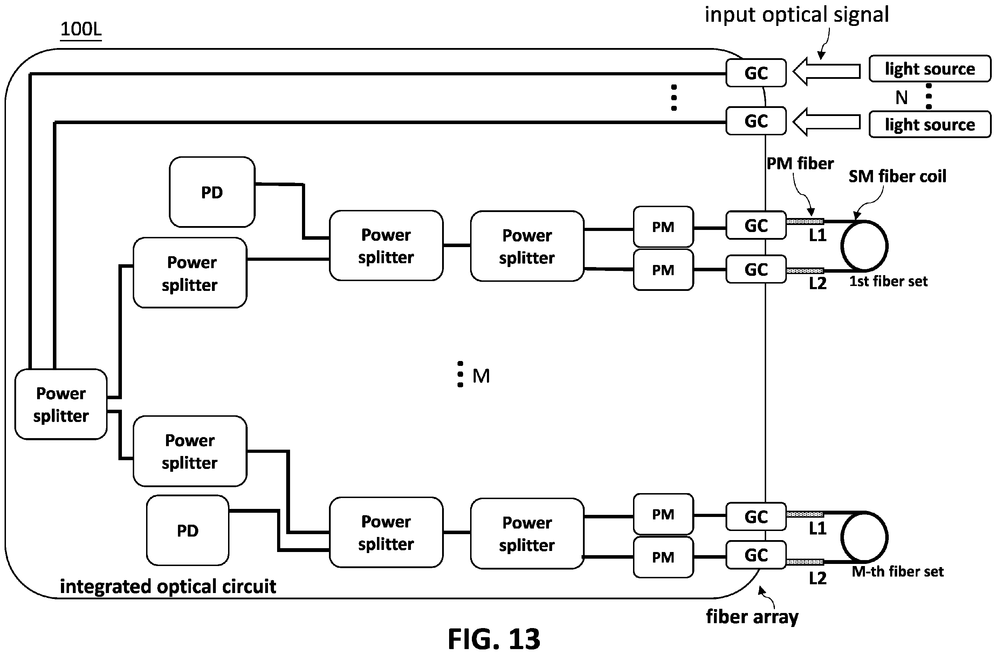

FIG. 13 shows a schematic drawing of a configuration of a device 100L with a N-axis grating coupler-based depolarized interferometric fiber optic gyroscope according to some embodiments of the present invention. The configuration in FIG. 13 is an extension of the setup in FIG. 12, illustrating a scenario involving multiple axes, such as applications with more than three or four axes. In the configuration of FIG. 13, the device 100L is designed to represent a layout for additional axes, including N light sources and M axes, where N and M are positive integers and M is greater than three. When the number of axes exceeds three, the additional axes (the fourth axis to the M-th axis) can serve as redundancy features. The additional axes do not interfere with the functionality of the original three axes. If one of the applied three axes fails, an auxiliary axis can take over as a redundant backup, replacing the faulty axis and enhancing the overall reliability of the device.

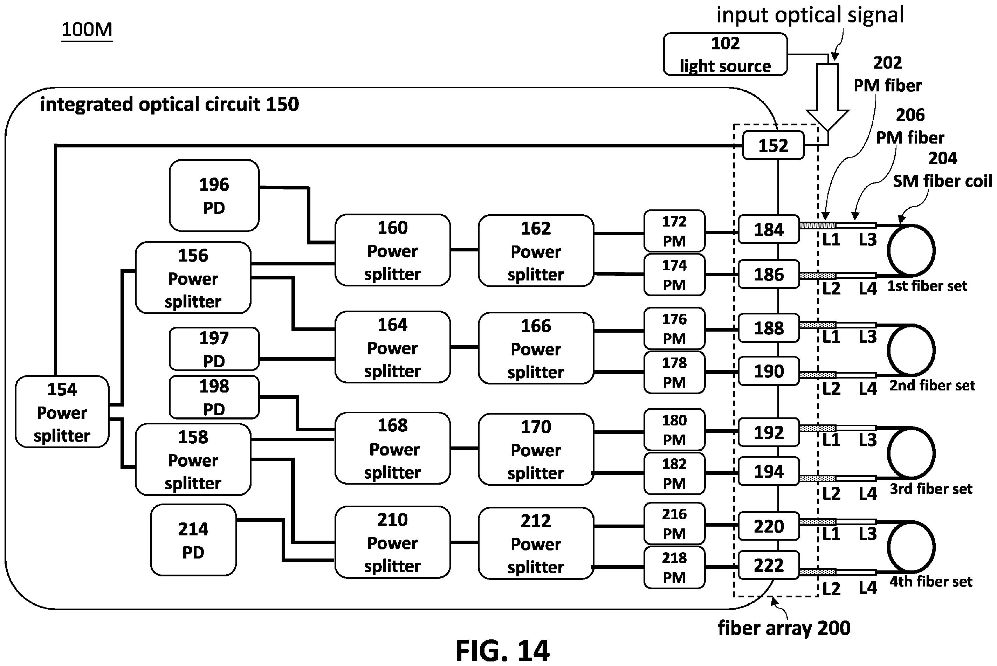

FIG. 14 shows a schematic drawing of a configuration of a device 100M with a four-axis grating coupler-based depolarized interferometric fiber optic gyroscope according to some embodiments of the present invention. In the configuration of FIG. 14, a shared light source and both ends of four fiber coils are respectively connected to an IOC through grating couplers arranged in a row, and four PDs are implemented on a chip, in which four sections of PM fiber are employed between IOC and a fiber coil. The device 100M has a configuration similar to that of the device 100K, except that the device 100M includes the fiber array 200 with each fiber set including four PM fibers 202 and 206 with tilted angles and one SM fiber coil assembly. The configuration of each fiber set is identical or similar to that of device 100B (i.e., four PM fibers 202 and 206 with tilted angles and lengths L1, L2, L3, L4).

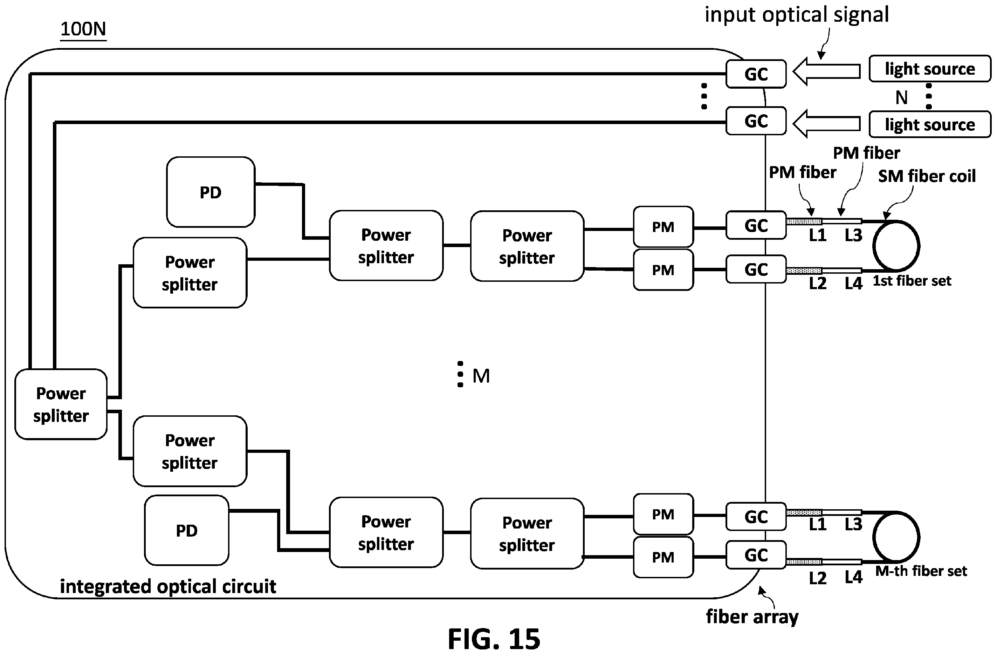

FIG. 15 shows a schematic drawing of a configuration of a device 100N with a N-axis grating coupler-based depolarized interferometric fiber optic gyroscope according to some embodiments of the present invention. The configuration in FIG. 15 is an extension of the setup in FIG. 14, illustrating a scenario involving multiple axes, such as applications with more than three or four axes. In the configuration of FIG. 15, the device 100N is designed to represent a layout for additional axes, including N light sources and M axes, where N and M are positive integers and M is greater than three. As aforedescribed, when the number of axes exceeds three, the additional axes (the fourth axis to the M-th axis) can serve as redundancy features. The additional axes do not interfere with the functionality of the original three axes. If one of the applied three axes fails, an auxiliary axis can take over as a redundant backup, replacing the faulty axis and enhancing the overall reliability of the device.

In the present invention, an angle is introduced between the principal axis of polarization in the PM optical fiber and the on-chip grating coupler to achieve depolarization, thereby enabling single-mode fiber coils to function as an angular sensing element. This configuration offers high flexibility and is compatible with various chip layouts. Therefore, the contribution of the present invention lies not only in providing a single-mode fiber coil solution, but also in offering a highly compatible technical approach adaptable to different integration designs.

In this disclosure, the terms "a," "an," and "the" encompass both singular and plural forms unless the context explicitly dictates otherwise. Similarly, when describing embodiments, a component described as being "on" or "over" another component may indicate direct contact or the presence of one or more intermediate components between them. Spatial terms such as "on," "above," "below," and similar expressions are defined relative to the components or planes shown in the figures. These terms are illustrative and do not restrict the actual arrangement, as long as the embodiments achieve their intended purposes.

The embodiments described herein were selected to best illustrate the principles of the invention and its practical applications, enabling those skilled in the art to understand and implement the invention across various embodiments and modifications tailored to specific uses. The foregoing description is provided for illustrative purposes and is not intended to be exhaustive or to limit the invention to the precise forms disclosed. Numerous modifications and variations will be apparent to those skilled in the art.

## Claims

1. A device with a grating coupler-based depolarized interferometric fiber optic gyroscope, comprising:

   a light source configured to generate a light beam for providing optical signals with a peak wavelength and a spectral width;
   an integrated optical circuit arranged on a chip and configured to receive the optical signals, wherein the integrated optical circuit comprises a first grating coupler and a second grating coupler;
   a single-mode (SM) fiber coil assembly having a first end and a second end opposite the first end;
   a first polarization-maintaining (PM) fiber optically coupled with the first grating coupler, wherein the first PM fiber is connected between the first grating coupler and the first end of the SM fiber coil, and the first PM fiber connected to the first grating coupler is rotated by a first tilted angle $\Phi1$ relative to a direction of grating stripes of the first grating coupler, where the first tilted angle $\Phi1$ ranges from 35 degrees to 55 degrees; and
   a second PM fiber optically coupled with the second grating coupler, wherein the second PM fiber is connected between the second grating coupler and the second end of the SM fiber coil, and the second PM fiber connected to the second grating coupler is rotated by a second tilted angle $\Phi2$ relative to a direction of grating stripes of the second grating coupler, where the second tilted angle $\Phi2$ ranges from 35 degrees to 55 degrees, and wherein the first PM fiber and the second PM fiber have lengths L1 and L2, respectively, which are defined according to the peak wavelength and the spectral width.

2. The device according to claim 1, wherein $L1 > L_{d1}$, $L2 > L_{d1}$, an absolute difference value between L1 and $L2 > L_{a1}$, and $L_{d1}$ is a first depolarization length that depends on the peak wavelength and the spectral width, and wherein $L_{d1} = \frac{L_{c1} * L_{b1}}{\lambda}$, where

   $L_{c1} = \frac{\lambda^2}{n_{g1}\Delta\lambda}$ and $L_{b1} = \frac{\lambda}{B1}$, and where $\lambda$ is

   the peak wavelength of the light source, $L_{c1}$ is coherence length, $n_{g1}$ is group refractive index of the first PM fiber and the second PM fiber, $L_{b1}$ is beat length, $\Delta\lambda$ is the spectral width of the light source, B1 is birefringence of the first PM fiber and the second PM fiber, and $B1 = n_{slow} - n_{fast}$.

3. The device according to claim 2, the first depolarization length $L_{d1}$ ranges from 30 cm to 50 cm, and a ratio of the length L1 or L2 to a length of the SM fiber coil assembly ranges from 0.001% to 10%.

4. The device according to claim 2, further comprising:

   a third PM fiber connected between the first PM fiber and the first end of the SM fiber coil, wherein the third PM fiber connected to the first PM fiber is rotated by a third tilted angle $\Phi3$ relative to a slow axis of the first PM fiber, where the third tilted angle $\Phi3$ ranges from 35 degrees to 55 degrees; and
   a fourth PM fiber connected between the second PM fiber and the second end of the SM fiber coil, wherein the fourth PM fiber connected to the second PM fiber is rotated by a fourth tilted angle $\Phi4$ relative to a slow axis of the second PM fiber, where the fourth tilted angle $\Phi4$ ranges from 35 degrees to 55 degrees, and wherein the third PM fiber and the fourth PM fiber have lengths L3 and L4, respectively, where $L3 > L_{d2}$, $L4 > L_{d2}$, an absolute difference value between L3 and $L4 > L_{d2}$, and $L_{d2}$ is a second depolarization length that depends on the peak wavelength and the spectral width of the light source.

5. The device according to claim 4, wherein

   $L_{d2} = \frac{L_{c2} * L_{b2}}{\lambda}$, where $L_{c2} = \frac{\lambda^2}{n_{g2}\Delta\lambda}$ and

   $L_{b2} = \frac{\lambda}{B2}$, and where $\lambda$ is the peak wavelength of the light source, $L_{c2}$ is coherence length, $n_{g2}$ is group refractive index of the third PM fiber and the fourth PM fiber, $L_{b2}$ is beat length, $\Delta\lambda$ is the spectral

width of the light source, B2 is birefringence of the third PM fiber and the fourth PM fiber, and $B2 = n_{slow} - n_{fast}$.

6. The device according to claim 4, wherein a ratio of the length L1 to the length L2 is different than a ratio of the length L3 to the length L4.

7. The device according to claim 4, wherein a ratio of the length L3 or L4 to a length of the SM fiber coil assembly ranges from 0.001% to 10%.

8. The device according to claim 1, further comprising: a photodiode configured to receive measured optical signals propagated from the SM fiber coil assembly at least via the first grating coupler and the second grating coupler and to convert the measured optical signals into an electrical signal for angular velocity measurement.

9. The device according to claim 8, wherein the photodiode is an on-chip photodiode integrated into the integrated optical circuit.

10. The device according to claim 1, further comprising a fiber array with the first PM fiber and the second PM fiber, wherein the fiber array further comprises at least one fiber for optically coupling the integrated optical circuit to the light source.

11. The device according to claim 1, wherein the integrated optical circuit has a layout for three-axis angular velocity measurement.

12. The device according to claim 1, wherein the integrated optical circuit has a layout for four-axis angular velocity measurement.

13. The device according to claim 1, the integrated optical circuit has a layout for three-axis angular velocity measurement and further has a layout for additional axes as redundancy features which is integrated with the three-axis angular velocity measurement into the chip.

14. The device according to claim 1, wherein the first tilted angle $\Phi 1$ and the second tilted angle $\Phi 2$ are set to be different from each other or the same as each other.

15. The device according to claim 1, wherein the integrated optical circuit further comprises a surface grating coupler optically coupled with the light source and receiving the optical signals for the integrated optical circuit.

**FIG. 1**

SM fiber coil

PD

PBS

ADC

PM1

PM2

PBS

ADC

Phase modulators

Delay line

Fiber array package

Fiber coil

Light coil

**FIG. 2A**

slow axis

grating direction

Φ

PM fiber's slow or fast axis is rotated by Φ
Φ is between 35°~55°

grating direction

**FIG. 2C**

slow axis

grating direction

PM fiber's slow or fast axis is parallel to grating direction

grating direction

**FIG. 2B**

FIG. 3

input optical signal

130
PM fiber

140
SM fiber coil

132
PM fiber

output optical signal

L1

Φ1

L2

Φ2

102
light source

112
input coupler

124
grating coupler

126
grating coupler

114
output coupler

104
PD

120
phase modulator

122
phase modulator

118
Power splitter

116
Power splitter

fiber array 200

integrated optical circuit 110

100C

FIG. 4

FIG. 5

100E

input optical signal

102 light source

fiber array 200

integrated optical circuit 110

112 input coupler

130 PM fiber

140 SM fiber coil

L1 Φ1 L2 Φ2

132 PM fiber

124 grating coupler

126 grating coupler

120 phase modulator

122 phase modulator

118 Power splitter

116 Power splitter

106 PD

measured optical signal

FIG. 6

**FIG. 7**

EP 4 718 027 A1

integrated optical circuit 110

107
light source

input optical signal

112
input coupler

130
PM fiber

140
SM fiber coil

116
Power
splitter

118
Power
splitter

120
phase
modulator

124
grating coupler

L1

Φ1

L2

122
phase
modulator

126
grating coupler

114
output coupler

132
PM fiber

Φ2

fiber array 200

108
PD

output optical signal

**FIG. 8**

EP 4 718 027 A1

FIG. 9

EP 4 718 027 A1

FIG. 10

EP 4 718 027 A1

**FIG. 11**

**FIG. 12**

EP 4 718 027 A1

FIG. 13

**FIG. 14**

EP 4 718 027 A1

**FIG. 15**

EP 4 718 027 A1

Europäisches
Patentamt

European
Patent Office

Office européen
des brevets

# EUROPEAN SEARCH REPORT

**Application Number**

EP 25 19 2728

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WANG YEN-CHIEH ET AL: "Silicon photonics multi-function integrated optical circuit for miniaturized fiber optic gyroscope", JOURNAL OF LIGHTWAVE TECHNOLOGY, vol. 41, no. 19, 1 October 2023 (2023-10-01), pages 1-8, XP093351827, USA ISSN: 0733-8724, DOI: 10.1109/JLT.2023.3282976 | 1,8-15 | INV. G01C19/72 |
| A | * the whole document * | 2-7 | |
| Y | EP 1 469 283 A2 (JAPAN AVIATION ELECTRONICS IND LTD [JP]) 20 October 2004 (2004-10-20) * paragraphs [0007], [0011], [0012]; figure 1 * | 1,8-15 | |

----- 

-----

| | TECHNICAL FIELDS SEARCHED (IPC) |
|---|---|
| | G01C |

The present search report has been drawn up for all claims

| Place of search | Date of completion of the search | Examiner |
|---|---|---|
| The Hague | 13 January 2026 | Kuhn, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 2728

This annex lists the patent family members relating to the patent documents cited in the above-mentioned European search report.
The members are as contained in the European Patent Office EDP file on
The European Patent Office is in no way liable for these particulars which are merely given for the purpose of information.

13-01-2026

| Patent document cited in search report | | Publication date | Patent family member(s) | | Publication date |
|---|---|---|---|---|---|
| EP 1469283 | A2 | 20-10-2004 | EP 1469283 | A2 | 20-10-2004 |
| | | | US 2007030491 | A1 | 08-02-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63700760
- US 20321425